# EUROPÄISCHE PATENTSCHRIFT

(11) **EP 0 879 358 B1**
(45) Veröffentlichungstag und Bekanntmachung des Hinweises auf die Patenterteilung: **22.10.2003**
(21) Anmeldenummer: 97944771.1
(22) Anmeldetag: 20.08.1997
(51) Int. Cl.: F04C 13/00, G01F 11/24

(54) **ROTATIONSKOLBENDOSIERER**
ROTARY PISTON REGULATING DEVICE
DOSEUR A PISTON ROTATIF

(30) Priorität: 21.08.1996 DE 29614473 U
(43) Veröffentlichungstag der Anmeldung: 25.11.1998
(73) Patentinhaber: Rappenhöner, Hans Richard, 51789 Lindlar (DE)
(72) Erfinder: Rappenhöner, Hans Richard, 51789 Lindlar (DE)
(74) Vertreter: Zapf, Christoph, Dipl.-Ing.
(86) Internationale Anmeldenummer: EP9704530
(87) Internationale Veröffentlichungsnummer: WO98010193

(56) Entgegenhaltungen:
- DE-U- 9 115 838
- DE-U- 9 414 093

## Beschreibung

Die vorliegende Erfindung betrifft einen Rotationskolbendosierer gemäß dem Oberbegriff des Anspruchs 1.

Ein solcher Dosierer ist einerseits aus der internationalen Veröffentlichung WO 93/13296 bekannt (Fig. 12 bis 15), sowie andererseits in einer speziellen Weiterbildung auch aus dem DE-U-94 14 093. Der bekannte Dosierer hat sich vor allem wegen seiner in der Regel sehr hohen Dosiergenauigkeit sowie auch wegen seiner sehr hohen Arbeitsgeschwindigkeit (hohe Anzahl von Dosier-Zyklen pro Zeiteinheit) bewährt. Im praktischen Einsatz hat sich jedoch gezeigt, daß es bei bestimmten Medien, insbesondere bei zucker- und /oder fetthaltigen Pulvern und Granulaten, beispielsweise bei Fertigsuppenpulvern, zu geringfügigen Unregelmäßigkeiten in der Dosiergenauigkeit kommen kann.

Der vorliegenden Erfindung liegt daher die Aufgabe zugrunde, einen gattungsgemäßen Rotationskolbendosierer zu schaffen, der bei praktisch allen beliebigen Medien eine gleichermaßen gute Dosiergenauigkeit gewährleistet.

Erfindungsgemäß wird dies durch die Merkmale des Anspruchs 1 erreicht. Vorteilhafte Weiterbildungen der Erfindung sind in den Unteransprüchen enthalten.

Erfindungsgemäß wird durch einen speziellen, vorzugsweise über Stellmittel variierbaren Bewegungszyklus des Dosierschiebers erreicht, daß er in einer bestimmten Phase von der eigentlichen, rotationssynchronen Hin- und Herbewegung abweicht. Dadurch wird eine Dosierphase definiert, in der der Dosierschieber zeitweilig über einen Dosierspalt vom Rotationskolben beabstandet ist, so daß ein bestimmtes Volumen des Mediums durch den Dosierspalt in die Arbeitskammer gelangt. Ferner wird eine Schließphase definiert, in der der Dosierspalt ganz - bzw. vorzugsweise bis auf einen sehr geringen Dichtspalt - geschlossen wird. Durch diese definierte Schließphase wird ein schieberartiger Verschluß der Arbeitskammer erreicht, wobei weiteres Medium durch den Dosierschieber vom Rotationskolben abgestreift wird. Dadurch wird ein unkontrolliertes, weitergehendes Eintreten oder gar ein Einsaugen von Medium in die Arbeitskammer sicher vermieden. Die Dosiergenauigkeit wird gesteigert und auch bei problematischen Medien in hinreichender Weise gewährleistet.

Von dem Zeitpunkt an, in dem der Dosierspalt gerade ganz bzw. bis auf den definierten Dichtspalt geschlossen ist, wird in einer Dichtphase der Dosierschieber dann wieder in radialer Richtung rotationssynchron angetrieben, um ein Vorbeibewegen des Dichtbereiches des Rotationskolbens zu gestatten. Während dieser Phase wirkt der Dosierschieber dichtend mit dem Rotationskolben zusammen, indem er genau seinem Umfangsverlauf folgt.

In einer ersten Ausführungsform der Erfindung wird der beschriebene Bewegungszyklus des Dosierschiebers in einer konstruktiv sehr einfachen Weise dadurch erreicht, daß der Dosierschieber in Bewegungsrichtung relativbeweglich über als "intermittierendes Schubgetriebe" ausgebildete Bewegungsübertragungsmittel mit einem Halter verbunden ist. Der Halter besitzt hierbei zwei Mitnehmerelemente, und zwar ein erstes, radial inneres Mitnehmerelement und ein zweites, radial äußeres Mitnehmerelement. Zwischen diesen Mitnehmerelementen ist ein Bewegungsbereich definiert, in dem der Halter relativ zu dem Dosierschieber frei beweglich ist. Dabei führt der Halter - analog zu den bekannten Rotationskolbendosierern gemäß WO 93/13296 und DE-U-94 14 093 - eine ständige, rotationssynchronisierte Hin- und Herbewegung aus, während der Dosierschieber nur taktweise, d.h. zeitweilig unterbrochen, durch Anlage an den jeweiligen Mitnehmerelementen mitgenommen wird. Hierbei wird durch das erste, innere Mitnehmerelement die radial äußere Endstellung, d.h. der äußere Totpunkt, der Bewegung des Dosierschiebers definiert. Das zweite, äußere Mitnehmerelement ist zweckmäßigerweise zur Einstellung des Dosierspaltes relativ zu dem Halter in Bewegungsrichtung verstellbar. Durch Anlage an diesem äußeren Mitnehmerelement wird der Dosierschieber bei seiner radial nach innen gerichteten Bewegung bis in den inneren Totpunkt bewegt, so daß hierdurch die Dosierstellung definiert wird. Da sich hierbei der Rotationskolben stetig weiterdreht, bewegt er sich mit seiner Umfangsfläche und dem nächsten Dichtbereich gegen den stillstehenden Dosierschieber (Schließphase). Dann wird der Dosierschieber von dem ersten Mitnehmerelement rotationssynchron zurückgezogen. Das Zurückziehen des Dosierschiebers erfolgt vorzugsweise gerade nur so weit, bis er vollständig außerhalb des Zylinderraums angeordnet ist.

Durch die Erfindung führt daher der Dosierschieber - im Vergleich zu den aus den oben genannten Veröffentlichungen bekannten Ausführungsformen - nur noch einen geringeren Radialhub zwischen seinen beiden Totpunkten aus, der sich aus der Dosiereinstellung ergibt; der radiale Bewegungshub ist gleich dem maximalen Hubabstand des Rotationskolbens reduziert um die Weite des jeweils eingestellten Dosierspaltes. Mit anderen Worten entspricht der Bewegungshub in etwa der freien Länge, mit der der Dosierschieber in der jeweiligen Dosierstellung in radialer Richtung in den Zylinderraum hineinragt. Dreht sich dann der Rotationskolben weiter, so bleibt der Dosierschieber vorzugsweise auch in der Stellung des äußeren Totpunktes zunächst kurz stehen, um in einer Öffnungsphase des nächsten Arbeitszyklus eine möglichst schnelle Öffnung bzw. Bildung der nächsten Arbeitskammer zu erreichen. Erst wenn der radiale Abstand zwischen dem Rotationskolben und dem zugekehrten Ende des Dosierschiebers (welches dann noch bevorzugt etwa auf dem Innenumfang des Zylinderraums liegt) die Weite des eingestellten Dosierspaltes erreicht hat, wird der Dosierschieber wieder entsprechend radial nach innen in den Zylinderraum derart hineinbewegt, daß in der Dosierphase der gewünschte Dosierspalt bis zum Beginn der nächsten Schließphase erhalten bleibt.

In einer zweiten, wegen besonderer Funktionsvorteile bevorzugten Ausführungsform sind die Bewegungsübertragungsmittel als Hebelgetriebe ausgebildet, wobei ein zweiarmiger Hebel über seinen Hebeldrehpunkt mit der ständig oszillierenden Antriebseinrichtung verbunden ist. Hierbei ist ein erster Hebelarm mit dem Dosierschieber und ein zweiter Hebelarm mit Bewegungssteuermitteln verbunden. Das Hebelgetriebe ist bezüglich seiner Hebelverhältnisse und/oder bezüglich der Bewegungssteuermittel derart ausgelegt, daß der von der Antriebseinrichtung über den Hebeldrehpunkt ständig rotationssynchron oszillierend angetriebene Hebel über den ersten Hebelarm den Dosierschieber derart kinematisch beaufschlagt, daß letzterer in der Dosierphase zeitweilig zur Bildung des Dosierspaltes stehenbleibt oder sich langsamer oder sogar richtungsumgekehrt bewegt. Hierzu ist das Zwischengetriebe entsprechend verstellbar ausgebildet, um das Bewegungsverhalten des Dosierschiebers variieren zu können, und zwar insbesondere bezüglich der Länge der Dosierphase relativ zur Länge der Dichtphase und/oder bezüglich der radialen Weite des Dosierspaltes. Dabei ist vorteilhafterweise auch eine Einstellung des Zwischengetriebes derart möglich, daß sich der Dosierschieber in der Dosierphase kurzzeitig den Dosierspalt vergrößernd zurückzieht und dann wieder den Dichtspalt verkleinernd vorbewegt. Dieses Bewegungsverhalten ist vor allem für solche Medien vorteilhaft, die größere Bestandteile enthalten, wie beispielsweise Fertigsuppenpulver mit bestimmten Partikeln, wie getrocknete Gemüse- und/oder Fleischstücke, Croutons und/oder dergleichen. Es handelt sich somit nicht um einen statischen Dosierspalt, sondern mehr um eine aktive, sehr genau definierbare Dosier-Öffnungsbewegung des Dosierschiebers. Diese Bewegung wird jeweils im Bereich zwischen zwei aufeinanderfolgenden Dichtbereichen des Rotationskolbens, d.h. in einem den radialen Hubabstand definierenden Talbereich des Außenumfangs des Rotationskolbens, mit vorzugsweise variabler, in Umfangsrichtung gemessener Breite bewirkt. Durch die bevorzugt einstellbare aktive Öffnungsbewegung des Dosierschiebers werden größere Partikel des Mediums, die sich ansonsten womöglich vor dem Dosierschieber aufstauen könnten, in die Arbeitskammer hineingelassen. Diese Ausführungsform eignet sich auch für körnige Medien, beispielsweise zum Dosieren von Erdnüssen und dergleichen.

Im folgenden soll anhand von in der Zeichnung dargestellten Ausführungsbeispielen die Erfindung näher erläutert werden. Dabei zeigen:
- Fig. 1: eine axiale Vorderansicht eines erfindungsgemäßen Rotationskolbendosierers,
- Fig. 2: einen Teil-Axialschnitt längs der Linie II-II in Fig. 1,
- Fig. 3: eine axiale Vorderansicht analog zu Fig. 1, d.h. in Pfeilrichtung III gemäß Fig. 2, allerdings unter Weglassung eines vorderen Gehäusedeckels,
- Fig. 4: eine vergrößerte, stark schematisierte Ansicht etwa entsprechend einem Schnitt in der Ebene IV-IV in Fig. 3, wobei nur die funktionswesentlichen Bestandteile des Dosierschieber-Antriebes in einer ersten Ausführungsform dargestellt sind,
- Fig. 5: eine Darstellung wie in Fig. 4, jedoch in einer anderen Phase des Rotations- bzw. Dosierzyklus,
- Fig. 6: eine Darstellung etwa entsprechend Fig. 4 in einer vorteilhaften Ausgestaltung der Erfindung.
- Fig.7: eine Ansicht analog zu Fig. 4 in einer zweiten, bevorzugten Ausführungsform des Dosierschieber-Antriebes,
- Fig. 8: eine vergrößerte Draufsicht VIII-VIII gemäß Fig. 7,
- Fig. 9: einen Schnitt in der Ebene IX-IX gemäß Fig. 8 zur Erläuterung des Zwischengetriebes dieser bevorzugten Ausführung,
- Fig. 10: eine Darstellung etwa entsprechend Fig. 9, jedoch in einer vorteilhaften Weiterbildung des Zwischengetriebes, und
- Fig. 11: eine Ansicht in Pfeilrichtung XI gemäß Fig. 10.

In den verschiedenen Figuren der Zeichnung sind gleiche Teile stets mit den gleichen Bezugszeichen versehen und werden daher in der Regel jeweils nur einmal beschrieben.

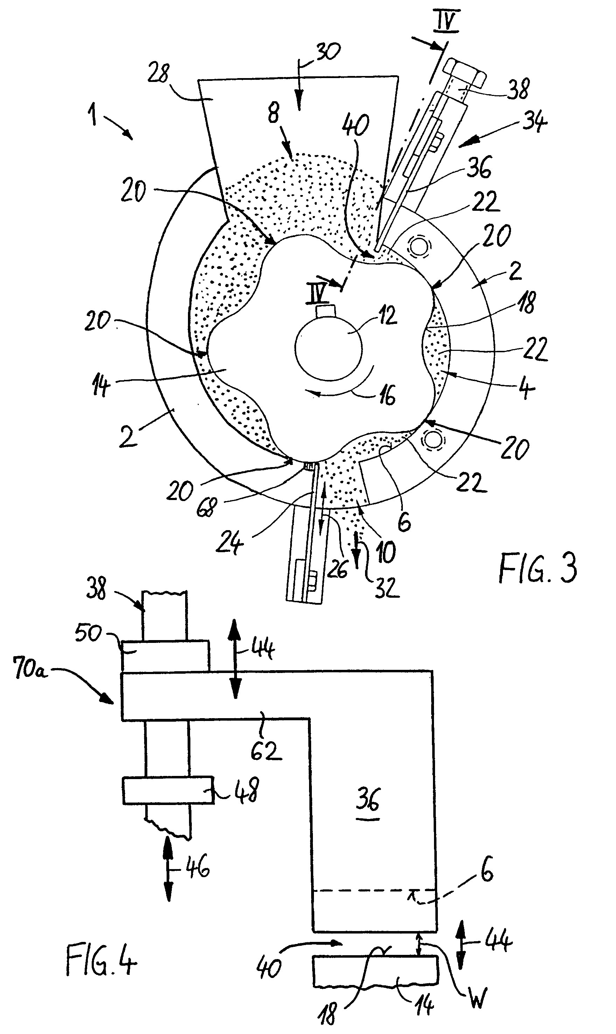

Ein erfindungsgemäßer Rotationskolbendosierer 1 besteht aus einem Gehäuse 2 mit einem Einlaß 8 und einem Auslaß 10 sowie mit einem Zylinderraum 4, der eine zumindest in einem Teil des Umfangs, und zwar zumindest zwischen Einlaß 8 und Auslaß 10, zylindrische (bzw. zumindest einem Kreiszylindersektor entsprechende) Innenumfangsfläche 6 aufweist (s. insbesondere Fig. 3). Innerhalb des Zylinderraums 4 ist über eine zu diesem bzw. zu der Innenumfangsfläche 6 koaxiale Antriebswelle 12 ein Rotationskolben 14 um eine Achse 12a rotationsantreibbar gelagert. Die Rotationsrichtung ist in Fig. 3 durch einen Pfeil 16 veranschaulicht. Der Rotationskolben 14 besitzt eine von der Kreisform abweichende (und/oder exzentrische) Umfangskontur derart, daß er im Bereich seiner Außenumfangsfläche 18 mindestens einen Dichtbereich 20 aufweist, mit dem der Rotationskolben 14 bei seiner Rotation mit der Innenumfangsfläche 6 des Zylinderraums 4 dichtend zusammenwirkt. Jeweils in seinem übrigen Umfangsbereich ist die Umfangsfläche 18 des Rotationskolbens 14 über einen radialen Hubstand von der Innenumfangsfläche 6 des Zylinderraums 4 beabstandet.

In der dargestellten, bevorzugten Ausführungsform ist der Rotationskolben 14 im wesentlichen polygonal mit konvex abgerundeten Polygonecken ausgebildet, wobei die Bereiche zwischen den konvexen "Ecken" vorzugsweise konkav gekrümmt sind. Gemäß Fig. 3 ist der Rotationskolben 14 beispielhaft "fünfeckig" ausgebildet, er kann jedoch beispielsweise auch "dreieckig" oder beliebig "n-eckig" ausgebildet sein.

Während der Rotation des Rotationskolbens 14 wird in jedem Arbeits- bzw. Dosierzyklus - ausgehend vom Bereich des Einlasses 8 - zwischen dem sich von diesem wegdrehenden Dichtbereich 20 und dem jeweils nachfolgenden Dichtbereich 20 eine Arbeitskammer 22 zur Aufnahme eines bestimmten, genau dosierten bzw. genau dosiert portionierten Volumens eines in Fig. 3 durch Punkte angedeuteten Mediums gebildet. Das Volumen der Arbeitskammer 22 wird in Rotationsrichtung (Pfeil 16) zwischen den beiden benachbarten Dichtbereichen 20 des Rotationskolbens 14 sowie in radialer Richtung zwischen der Innenumfangsfläche 6 des Zylinderraums 4 und der zwischen den Dichtbereichen 20 liegenden Fläche 18 des Rotationskolbens 14 genau definiert. Aus der sich mit der Drehung des Rotationskolbens 14 in Pfeilrichtung 16 bewegenden Arbeitskammer 22 gelangt das Medium dann in den Auslaß 10. Damit das Medium auch tatsächlich vollständig aus der Arbeitskammer 22 über den Auslaß 10 austritt, ist in Rotationsrichtung gesehen hinter dem Auslaß 10 vorzugsweise ein Trennschieber 24 angeordnet, der derart beweglich geführt ist, daß er stets dichtend mit der gesamten Außenumfangsfläche 18 einschließlich der Dichtbereiche 20 des Rotationskolbens 14 zusammenwirkt. Es ist besonders vorteilhaft, den Trennschieber 24 rotationssynchron in radialer Richtung (Doppelpfeil 26 gemäß Fig. 3) zwangsweise anzutreiben.

Der Rotationskolbendosierer 1 ist vor allem für körnige, pulverförmige Medien geeignet, d.h. für solche Stoffe, die aus einzelnen, mehr oder weniger großen Partikeln bestehen, und die daher im Grunde fließfähig bzw. mehr "rieselfähig" sind. Es handelt sich folglich um Schüttgut. Hierbei wird dann der Dosierer 1 im Betrieb - bezogen auf die Lage im Raum - so angeordnet, daß der Einlaß 8 vertikal oben und der Auslaß 10 im wesentlichen vertikal nach unten gerichtet angeordnet sind. Im Bereich des Einlasses 8 ist zweckmäßigerweise ein Einfülltrichter 28 zur Aufnahme und Zuführung des jeweiligen Mediums angeordnet. Das Medium kann dann hauptsächlich schwerkraftbedingt in Pfeilrichtung 30 nach unten in den Einlaß 8 rutschen bzw. rieseln. Entsprechend fällt das Medium dann auch wieder - im wesentlichen schwerkraftbedingt - nach unten in Pfeilrichtung 32 gemäß Fig. 3 aus dem Auslaß 10 heraus.

Zum Variieren des in der jeweiligen Arbeitskammer 22 geförderten Volumens des Mediums, d.h. zum Reduzieren des in jedem Dosierzyklus in jeder Arbeitskammer 22 tatsächlich enthaltenen Fördervolumens gegenüber dem maximal möglichen Volumen der jeweiligen Arbeitskammer 22, ist eine Dosiereinrichtung 34 vorgesehen, die einen in Rotationsrichtung (Pfeil 16) hinter dem Einlaß 8 und im wesentlichen radial angeordneten Dosierschieber 36 aufweist.

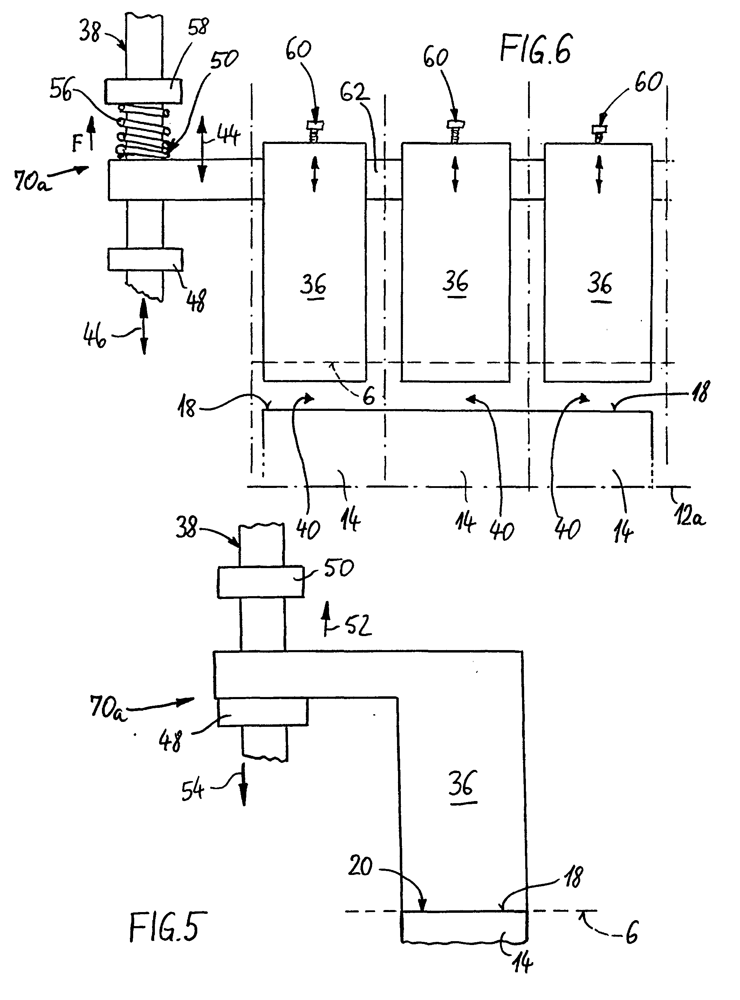

In dem ersten Ausführungsbeispiel nach Fig. 4 bis 6 ist der Dosierschieber 36 an einem Halter 38 relativ zu diesem derart in radialer Richtung (in den Zylinderraum 4 hinein) verstellbar gehaltert, daß zwischen dem Rotationskolben 14 bzw. dessen Außenumfangsfläche 18 und dem dem Rotationskolben 14 zugekehrten Ende des Dosierschiebers 36 ein Dosierspalt 40 mit einer variabel verengbaren Öffnungsweite W (Fig. 4) einstellbar ist. Hierbei ist der Dosierschieber 36 über den Halter 38 sowie mittels einer Antriebseinrichtung 42 in Abhängigkeit von der Rotation des Rotationskolbens 14 derart radial hin und her in Doppelpfeilrichtung 44 antreibbar, daß der Dosierschieber 36 jeweils radial nach außen aus dem Zylinderraum 4 ausweicht, wenn sich der jeweilige Dichtbereich 20 des Rotationskolbens 14 an dem Bereich des Dosierschiebers 36 vorbeibewegt. Dadurch kann der Rotationskolben 14 mit seinen Dichtbereichen 20 auch bei verengter Öffnungsweite W des Dosierspaltes 40 den Dosierschieber 36 jeweils störungs- bzw. kollisionsfrei passieren.

Wie sich insbesondere aus den Prinzipdarstellungen in Fig. 4 bis 6 ergibt, ist erfindungsgemäß einerseits vorgesehen, daß der Halter 38 von der Antriebseinrichtung 42 ständig synchron zur Rotation des Rotationskolbens 14 radial hin und her angetriebenen wird (Doppelpfeil 46). Andererseits ist der Dosierschieber 36 mit dem Halter 38 über ein Zwischengetriebe 70a derart relativbeweglich verbunden, daß er eine unstetige, jeweils in beiden End- bzw. Umkehrstellungen (Totpunkten) seiner radialen Hin- und Herbewegung (Doppelpfeil 44) durch zeitweiligen Stillstand unterbrochene Bewegung ausführt. Bei dieser Ausführung des Zwischengetriebes 70a handelt es sich somit um ein "intermittierendes Schubgetriebe". Für eine Bewegungsmitnahme des Dosierschiebers 36 radial nach außen weist der Halter 38 ein erstes, radial inneres Mitnehmerelement 48 auf und für die Bewegungsmitnahme radial nach innen ein zweites, äußeres Mitnehmerelement 50. Im Bereich zwischen den beiden Mitnehmerelementen 48, 50 ist eine grundsätzlich freie Relativbewegung (Schiebebewegung) zwischen dem Halter 38 und dem Dosierschieber 36 möglich. Dabei ist aber jedenfalls der Dosierschieber 36 derart kraftschlüssig geführt, daß er sich ausschließlich bei Mitnahme durch eines der Mitnehmerelemente 48, 50 bewegt und ansonsten kraftschlüssig in beliebigen Positionen stillstehend gehalten ist.

Das erste, innere Mitnehmerelement 48 ist in einer derartigen Stellung - und insbesondere starr - mit dem Halter 38 verbunden, daß bei einer Bewegung des Halters 38 radial nach außen (Pfeilrichtung 52 gemäß Fig. 5) durch Anlage der Dosierschieber 36 von dem Mitnehmerelement 48 mitgenommen wird, und zwar vorzugsweise gerade so weit, bis sein freies, radial nach innen weisendes Ende etwa auf der Innenumfangsfläche 6 des Zylinderraums 4 liegt. Dieser Zustand ist in Fig. 5 veranschaulicht, indem die Innenumfangsfläche 6 gestrichelt angedeutet ist. Bewegt sich nachfolgend der Halter 38 wieder radial nach innen (Pfeil 54 in Fig. 5), so bleibt der Dosierschieber 36 zunächst stehen, bis das radial äußere, zweite Mitnehmerelement 50 ihn durch Anlage wieder in seine Dosierstellung bewegt, in der er sich entsprechend der Dosierspalteinstellung in den Zylinderraum 4 erstreckt. Dies ist in Fig. 4 ebenfalls durch die gestrichelt angedeutete Innenumfangsfläche 6 veranschaulicht.

Durch die beschriebene, bevorzugte Ausführungsform wird die eingangs in der Beschreibungseinleitung bereits beschriebene Funktionsweise erreicht.

In Fig. 6 ist eine vorteilhafte Weiterbildung der Erfindung veranschaulicht, wonach das zweite, äußere Mitnehmerelement 50 derart in Bewegungsrichtung des Halters 38 bzw. des Dosierschiebers 36 federelastisch ist, daß bezüglich der Mitnahme-Anlage des Dosierschiebers 36 an dem Mitnehmerelement 60 unterhalb eines bestimmten Grenzwertes einer Anlagekraft F eine im wesentlichen starre, d.h. relativbewegungsfreie Anlage gewährleistet ist, während bei Auftreten einer Anlagekraft F mit einem den Grenzwert übersteigenden Wert eine weitergehende Bewegung des Dosierschiebers 36 relativ zu dem Halter 38 gegen die Federelastizität des Mitnehmerelementes 50 möglich ist. Diese vorteilhafte Ausführungsform dient zur sogenannten "Crash-Vermeidung", d.h. zur Vermeidung von Schäden und sonstigen Störungen insbesondere in solchen Fällen, wenn innerhalb des Mediums relativ harte, große Partikel, beispielsweise Nüsse oder dergleichen, enthalten sind. Treffen derartige Partikel auf den Dosierschieber 36, so kann dieser vorteilhafterweise federelastisch ausweichen, ohne daß es zu Schäden kommen kann. Nach Wegbewegung des Partikels nimmt der Dosierschieber 36 dann wieder seine entsprechend eingestellte Stellung ein. Wie in Fig. 6 beispielhaft dargestellt ist, kann das zweite Mitnehmerelement 50 von einer Schraubenfeder 56 gebildet bzw. über eine entsprechende Feder abgestützt sein. Die Feder ihrerseits ist über ein Verstellelement 58 zwecks Einstellung der Größe des Dosierspaltes 40 abgestützt.

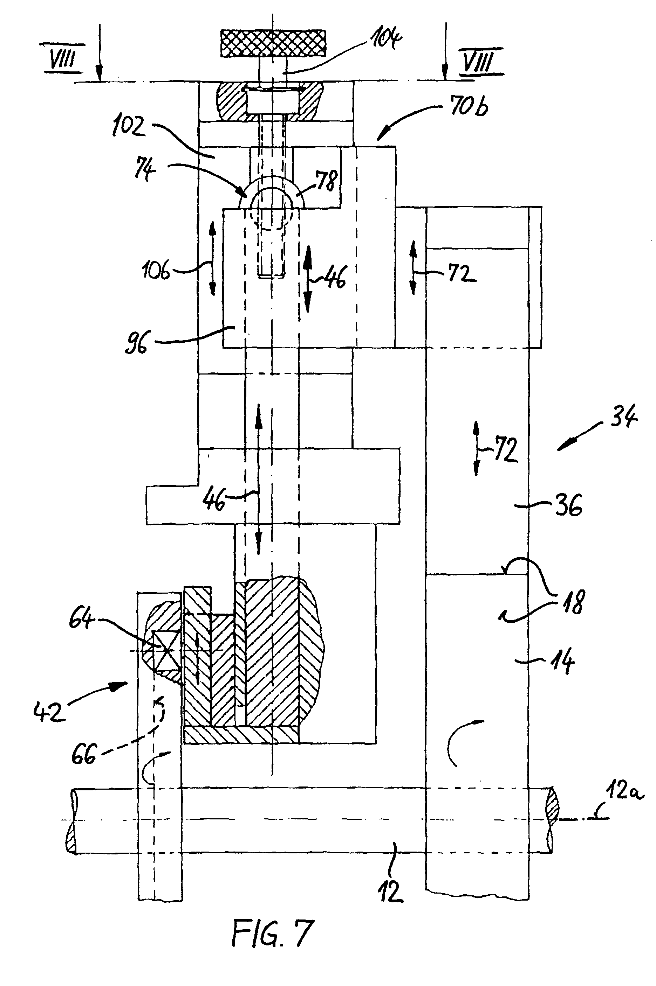

In den Fig. 7 bis 11 ist eine zweite, bevorzugte Ausführungsform des erfindungsgemäßen Dosierschieberantriebs veranschaulicht. Gemäß Fig. 7 ist auch hierbei die ständig in Doppelpfeilrichtung 46 oszillierende Antriebseinrichtung 42 über ein Zwischengetriebe 70b mit dem Dosierschieber 36 verbunden. Aufgrund der Ausgestaltung des Zwischengetriebes 70b führt der Dosierschieber 36 eine modifizierte, vorzugsweise variable Hin- und Herbewegung aus, was durch Doppelpfeile 72 veranschaulicht wird.

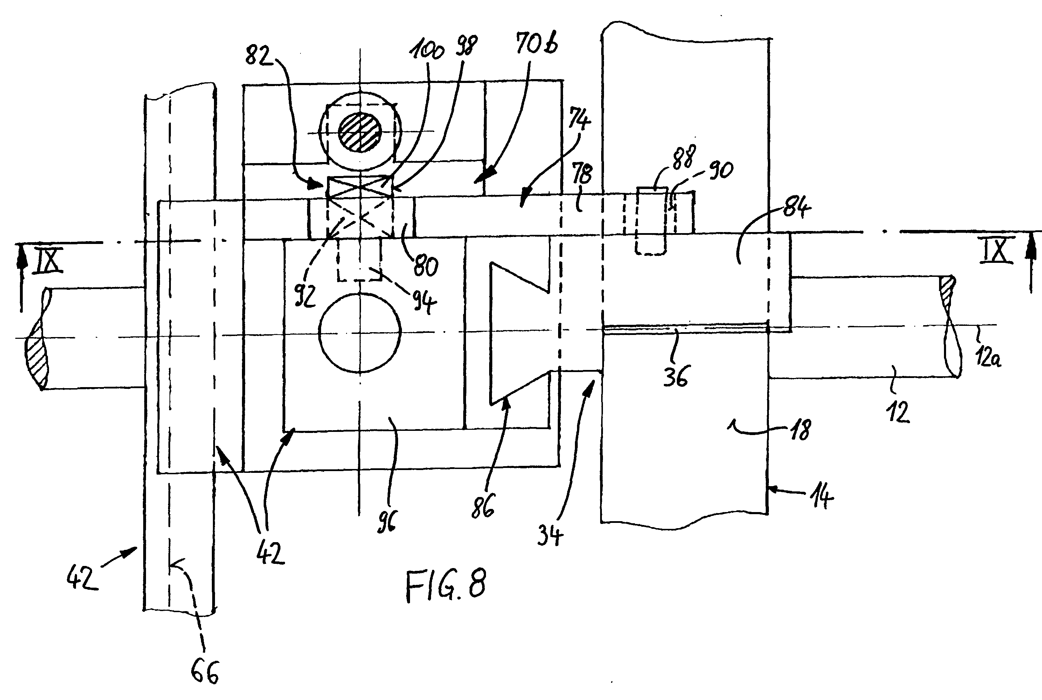

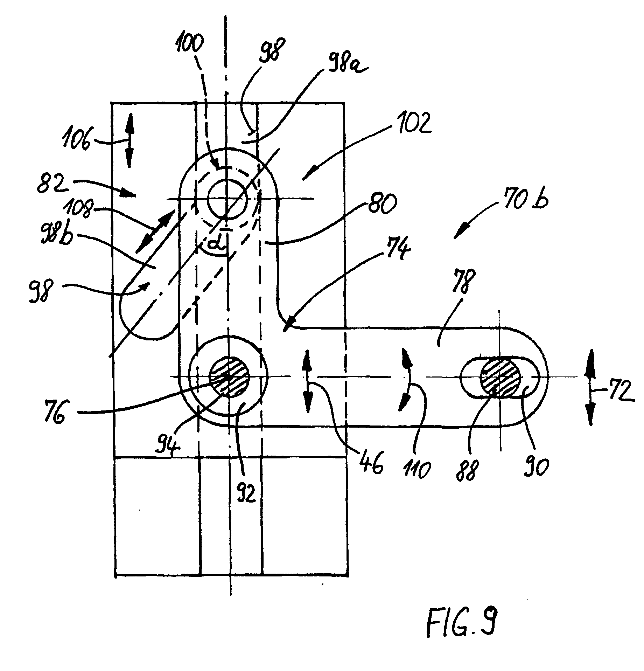

Wie sich vor allem aus Fig. 8 und 9 ergibt, ist in dieser Ausführungsform das Zwischengetriebe 70b als Hebelgetriebe ausgebildet. Ein zweiarmiger Hebel (Doppelhebel) 74 ist über seinen Hebeldrehpunkt 76 mit der ständig oszillierenden Antriebseinrichtung 42 verbunden, wobei ein erster Hebelarm 78 mit dem Dosierschieber 36 und ein zweiter Hebelarm 80 mit speziellen Bewegungssteuermitteln 82 verbunden sind. Gemäß Fig. 8 ist der Dosierschieber 36 an einem Halteteil 84 befestigt und über eine Schiebeführung 86, wie dargestellt beispielsweise eine Schwalbenschwanzführung, in seiner Bewegungsrichtung verschiebbar geführt. Zur Verbindung des Dosierschiebers 36 mit dem ersten Hebelarm 78 weist das Halteteil 84 einen Bolzen 88 auf, der in ein Langloch 90 des ersten Hebelarms 78 eingreift (vgl.auch Fig. 9). Im Hebeldrehpunkt 76 ist zweckmäßigerweise ein in Fig. 8 gestrichelt eingezeichnetes Drehlager 92 (beispielsweise Kugellager) vorgesehen, welches in einer Lageröffnung des Hebels 74 sitzt und über einen Zapfen 94 mit einem direkt von der Antriebseinrichtung 42 rotationssynchron angetriebenen Verbindungsteil 96 verbunden ist.

Gemäß Fig. 9 erstreckt sich der erste Hebelarm 78 im wesentlichen senkrecht zur Bewegungsrichtung der Antriebseinrichtung 42 und des Dosierschiebers 36 (Doppelpfeile 46, 72). Der zweite Hebelarm 80 verläuft etwa rechtwinklig zum ersten Hebelarm 78 und somit etwa parallel zur Bewegungsrichtung 46, 72. Die Bewegungssteuermittel 82 bestehen im wesentlichen aus einer Steuerkurvenbahn 98 und einem an dem Ende des zweiten Hebelarms 80 angeordneten, mit der Steuerkurvenbahn 98 zusammenwirkenden Nockenelement 100. Hierbei besteht die Steuerkurvenbahn 98 aus einem ersten, im wesentlichen entsprechend der Bewegungsrichtung 46, 72 des Dosierschiebers 36 bzw. der Antriebseinrichtung 42 verlaufenden Abschnitt 98a und einem in einem bestimmten, insbesondere variablen Neigungswinkel α schräg zum ersten Abschnitt 98a verlaufenden, zweiten Abschnitt 98b. Die Steuerkurvenbahn 98 ist Bestandteil eines im Betriebszustand ortsfest angeordneten, vorzugsweise aber zur Einstellung des Dosiervolumens in Bewegungsrichtung 46 der Antriebseinrichtung 42 verstellbar geführten Steuerelementes 102. Hierdurch ist die Steuerkurvenbahn 98 relativ zu dem Hebel 74 verstellbar, so daß der Übergangspunkt zwischen den Abschnitten 98a und 98b der Steuerkurbenbahn 98 in Bewegungsrichtung 46 verlagert werden kann. Gemäß Fig. 7 ist das bevorzugt als flache Platte ausgebildete Steuerelement 102 über eine Stellschraube 104 in Doppelpfeilrichtung 106 verstellbar. Die Stellschraube 104 greift in ein Gewindeloch des Steuerelementes 102 ein.

Anhand Fig. 9 soll nun die Funktion dieser Ausführungsform des Zwischengetriebes 70b beschrieben werden. Über die Antriebseinrichtung 42 wird der Hebel 74 über seinen Drehpunkt 76 ständig rotationssynchron in Doppelpfeilrichtung 46 angetrieben. Hierbei läuft das Nockenelement 100 in der Steuerkurvenbahn 98. Befindet sich das Nockenelement 100 in dem ersten Abschnitt 98a der Steuerkurvenbahn 98, so wird bedingt durch die Hebelverhältnisse auch der Dosierschieber 36 (über den ersten Hebelarm 78 und den in sein Langloch 90 eingreifenden Bolzen 88) entsprechend rotationssynchron bewegt (Doppelpfeil 72). Gelangt dann das Nockenelement 100 in den Bereich des schräg verlaufenden zweiten Abschnittes 98b der Steuerkurvenbahn 98, so wird der zweite Hebelarm 80 entsprechend dem Doppelpfeil 108 ausgelenkt, so daß auch der erste Hebelarm 78 gemäß dem Doppelpfeil 110 verschwenkt wird. Da dieser Schwenkbewegung jedoch die lineare Hin- und Herbewegung des Hebels 74 in Doppelpfeilrichtung 46 überlagert ist, weicht der Dosierschieber 36 in dieser Phase von der rotationssynchronen Bewegung (Doppelpfeil 46) ab. Dieses abweichende Bewegungsverhalten des Dosierschiebers 36 läßt sich durch Auslegung der Hebelverhältnisse und/oder der Steuerkurvenbahn 98 bezüglich des Neigungswinkels α ihres zweiten Abschnittes 98b nahezu beliebig festlegen. So kann erreicht werden, daß der Dosierschieber 36 in der Dosierphase zeitweilig zur Bildung des Dosierspaltes 40 gänzlich stehenbleibt (gegenseitige Aufhebung der Hebelbewegungen gemäß der Doppelpfeile 46 und 110). Zudem kann auch eine verlangsamte Bewegung erreicht werden. Schließlich ist es sogar möglich, die Bewegungsrichtung des Dosierschiebers umzukehren, wenn die Schwenkbewegung in Doppelpfeilrichtung 110 die Linerarbewegung gemäß Doppelpfeil 46 überwiegt. Hierdurch kann in der Dosierphase vorteilhafterweise ein kurzzeitiges Zurückziehen und Wiedervorbewegen des Dosierschiebers 36 erreicht werden. Der Dosierschieber 36 steht daher nicht in einer statischen Dosierstellung, sondern führt vielmehr eine aktive, sehr genau definierbare Dosier-Öffnungsbewegung aus.

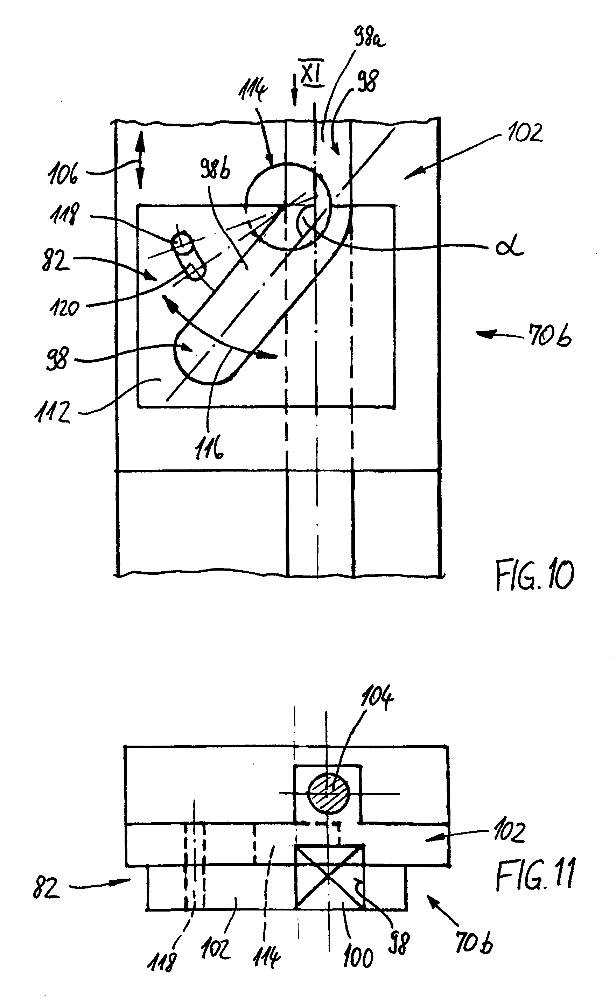

In den Fig. 10 und 11 ist eine vorteilhafte Ausgestaltung der Erfindung veranschaulicht. Hierbei ist der Neigungswinkel α zwischen den beiden Abschnitten 98a und 98b der Steuerkurvenbahn 98 verstellbar. Dies wird dadurch erreicht, daß der zweite Abschnitt 98b der Steuerkurvenbahn 98 Bestandteil eines zusätzlichen, verstellbar auf dem Steuerelement 102 angeordneten Einstellelementes 112 ist.

Dieses Einstellelement 112 ist über einen Drehbolzen 114 mit dem Steuerelement 102 derart verbunden, daß es in Doppelpfeilrichtung 116 verschwenkt und in verschiedenen Stellungen arretiert werden kann. Dabei gehen die beiden Abschnitte 98a, b stetig ineinander über. Zur Begrenzung des Einstellbereichs kann beispielsweise ein mit dem Steuerelement 102 verbundener Anschlagbolzen 118 in ein Langloch 120 des Einstellelementes 112 eingreifen.

Diese Ausführungsform des Zwischengetriebes 70b ist vor allem wegen der sehr definierten Antriebsbewegung des Dosierschiebers 36 sowie auch wegen sehr geringer Geräuschentwicklung vorteilhaft. Zudem kann durch das Zwischengetriebe 70b auf einfache Weise eine Änderung, z.B. Vergrößerung, des Volumens der Arbeitskammern bzw. des radialen Hubabstandes (radiale Kammerweite) vorgenommen werden. Hierzu braucht nur der Rotationskolben gegen eine Ausführung mit anderem Umfangsverlauf ausgetauscht zu werden. Vorteilhafterweise braucht dabei nicht auch die Antriebseinrichtung geändert zu werden, sondern das Bewegungsverhalten des Dosierschiebers kann allein durch eine entsprechende Einstellung des Zwischengetriebes 70b an den anderen Rotationskolben angepaßt werden.

In Fig. 6 ist noch eine vorteilhafte Ausgestaltung veranschaulicht, wonach der erfindungsgemäße Rotationskolbendosierer in einer Mehrfachanordnung von mindestens zwei, wie dargestellt drei oder mehr, gleichachsig hintereinanderliegend gemeinsam angetriebenen Rotationskolben 14 und entsprechend zugehörigen Dosierschiebern 36 ausgebildet ist. Eine solche Mehrfachanordnung ist natürlich auch für die Ausführung nach Fig. 7 bis 11 möglich. Die einzelnen Rotationskolben 14 bzw. entsprechende Teilabschnitte eines durchgehenden Rotationskolbens 14 und die zugehörigen Dosierschieber 36 sind in voneinander getrennten Gehäusekammern angeordnet. Jeder einzelne Dosierschieber 36 ist hierbei zweckmäßigerweise über Stellmittel 60 zwecks Feineinstellung des jeweiligen Dosierspaltes 40 verstellbar. Beispielsweise ist gemäß Fig. 4 bis 6 jeder Dosierschieber über Stellmittel 60 entsprechend verstellbar mit dem Halter 38 bzw. mit einem zu dem Halter 38 führenden Querverbinder 62 verbunden. Die Stellmittel 60 dienen dazu, die einzelnen Dosier-Volumina möglichst gleich einzustellen, während die eigentliche Dosierspalt-Einstellung gemeinsam für alle Dosierschieber 36 durch Einstellung des Zwischengetriebes 70a, 70b erfolgt.

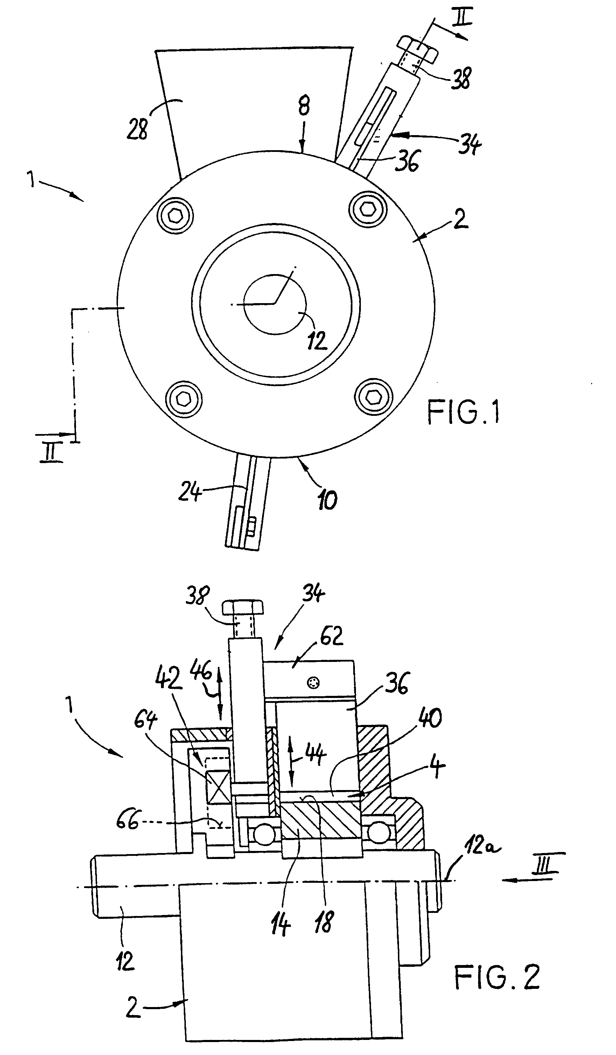

Wie sich noch aus Fig. 2 ergibt, kann die mittelbar den Dosierschieber 36 - sowie insbesondere auch unmittelbar den Trennschieber 24 - antreibende Antriebseinrichtung 42 als Nockenantrieb ausgebildet sein, wobei ein eingangsseitig mit dem Zwischengetriebe 70a bzw. 70b verbundener Nocken 64 in einer Nockenbahn 66 läuft. Die Nockenbahn 66 rotiert synchron mit dem Rotationskolben 14, und ihr Verlauf ist an den Umfangsverlauf der Außenumfangsfläche 18 des Rotationskolbens 14 angepaßt. Hinsichtlich weiterer Einzelheiten der Antriebseinrichtung 42 wird auf die eingangs erwähnten Anmeldungen WO 93/13296 und DE-GM 94 14 093 in vollem Umfange Bezug genommen.

Gemäß Fig. 3 ist es zudem vorteilhaft, wenn dem Trennschieber 24 ein Bürstenelement 68 oder dergleichen Abstreifelement in Rotationsrichtung (Pfeil 16) nachgeordnet ist. Das Bürstenelement 68 ist vorzugsweise gehäuseseitig fixiert und wirkt auf die Dichtbereiche 20 des Rotationskolbens 14. Alternativ wäre es ebenfalls denkbar, ein Bürstenelement unmittelbar an dem Trennschieber 24 anzuordnen. Alternativ oder aber zusätzlich kann es zudem von besonderem Vorteil sein, im Bereich des Auslasses 10 Mittel zum Einblasen von Druckluft derart vorzusehen, daß das Entleeren der Arbeitskammer 22 durch Ausblasen des Mediums bewirkt oder zumindest unterstützt wird. Zu diesem Zweck können insbesondere im freien Endbereich des Trennschiebers 24 Druckluft-Düsen gebildet sein. Dabei erfolgt das Einblasen bevorzugt taktweise jeweils nur kurzzeitig in den Phasen der Kammer-Entleerung; dies kann erreicht werden, indem die Druckluft durch die Bewegungen des Trennschiebers 24 gesteuert bzw. getaktet wird. Durch die Druckluft wird das Medium auch im Falle einer eventuellen Klebwirkung am Rotationskolben 14 von diesem praktisch vollständig gelöst und kann nachfolgend aus dem Auslaß 10 fallen.

Es sei bemerkt, daß die Maßnahme des Einblasens von Druckluft auch unabhängig von der vorliegenden Erfindung angewandt werden kann. Zudem eignet sich der Dosierschieberantrieb insbesondere in der Ausführungsform nach Fig. 7 bis 11 auch allgemein, d.h. unabhängig von der speziellen Art des Rotationskolbendosierers, als "Schiebersteuerung" für nahezu beliebige Schieberdosierer.

Es ist vorteilhaft, den Dosierschieber 36 - im Falle einer Mehrfachanordnung (vgl. das Beispiel nach Fig. 6) jeden Dosierschieber unabhängig von den anderen - derart federelastisch abzustützen, daß er in Öffnungsrichtung (radial nach außen) gegen Federkraft eine Ausweichbewegung ausführen kann, wenn er mit größeren Partikeln kollidiert ("Crash-Vermeidung", vgl. die obige Beschreibung zu Fig.6). Ferner kann der bzw. jeder Dosierschieber auch aus mehreren parallelen, stab- oder streifenförmigen Einzelelementen bestehen, wobei jedes Einzelelement unabhängig von den anderen federelastisch in Öffnungsrichtung beweglich ist. Hierdurch ist eine nur bereichsweise Ausweichbewegung möglich, wenn der Dosierschieber auf bestimmte Partikel trifft. Da die übrigen Bereiche des Dosierschiebers unverändert bleiben, führt diese Ausführung zu einer sehr hohen Dosiergenauigkeit auch bei Medien, die größere Partikel enthalten.

Die Erfindung ist nicht auf die dargestellten und beschriebenen Ausführungsbeispiele beschränkt, sondern umfaßt auch alle im Sinne der Erfindung gleichwirkenden Ausführungen. Im Falle einer Mehrfachanordnung mit mehreren "Teil-Dosierern" (Anspruch 20) ist es vor allem bei der Ausführungsform nach Fig. 7 bis 11 vorteilhaft, jeden Dosierschieber über ein eigenes Zwischengetriebe 70b steuerbar anzutreiben. Dabei erfolgt auf den Eingangsseiten der Zwischengetriebe 70b ein gemeinsamer ständiger Antrieb über die Antriebseinrichtung 42. Der Vorteil dieser Ausgestaltung liegt vor allem darin, daß die einzelnen Dosierschieber bezüglich ihres Bewegungsablaufes unabhängig voneinander gesteuert werden können, so daß mit den einzelnen "Teil-Dosierern" sogar verschiedene Medien gleichzeitig dosiert werden können (z.B. bei Mischungen, wie Trockensuppen, die einzelnen Ingredienzen, wie Trockenpulver, Nudeln, Trockengemüseteile und/oder dergleichen).

Zudem wäre es grundsätzlich möglich, den erfindungsgemäßen Bewegungszyklus des Dosierschiebers unmittelbar durch eine entsprechende Ausgestaltung der Antriebseinrichtung 42 bzw. einen entsprechenden Verlauf der Nockenbahn 66 zu erzeugen. Die beschriebenen, bevorzugten Ausführungsformen haben aber den Vorteil, daß es einfach, schnell und problemlos ist, die Dosiermenge bzw. den jeweiligen Dosierspalt 40 zu verändern. Für die permanent oszillierende Antriebseinrichtung 42 könnte - alternativ zu dem beschriebenen Nockenantrieb - auch jeder andere geeignete Oszillationsantrieb verwendet werden, wie beispielsweise ein pneumatischer und/oder hydraulischer Druckmittelzylinder oder ein Kurbelantrieb.

## Patentansprüche

1. Rotationskolbendosierer (1) zum Dosieren von fließoder rieselfähigen, insbesondere pulverförmigen oder körnigen Medien, mit einem innerhalb eines Zylinderraums (4) gelagerten Rotationskolben (14), der im Bereich seiner Außenumfangsfläche (18) mindestens einen derart dichtend mit einer Innenumfangsfläche (6) des Zylinderraums (4) zusammenwirkenden Dichtbereich (20) aufweist, daß bei seiner Rotation in jedem Zyklus - jeweils ausgehend vom Bereich eines Einlasses (8) - eine Arbeitskammer (22) zur Aufnahme eines bestimmten Volumens des Mediums gebildet wird, wobei zum Variieren des in der Arbeitskammer (22) geförderten Volumens des Mediums ein Dosierschieber (36) derart in radialer Richtung in den Zylinderraum (4) hinein verstellbar geführt ist, daß zwischen dem Rotationskolben (14) und dem diesem zugekehrten Ende des Dosierschiebers (36) ein Dosierspalt (40) mit einer variablen Öffnungsweite (W) einstellbar ist, wobei der Dosierschieber (36) mittels einer Antriebseinrichtung (42) in Abhängigkeit von der Rotation des Rotationskolbens (14) derart radial hin und her angetrieben wird, daß der Dosierschieber (36) jeweils während der Vorbeibewegung des Dichtbereichs (20) des Rotationskolbens (14) aus seiner jeweiligen in den Zylinderraum (4) ragenden Dosierstellung nach außen aus dem Zylinderraum (4) ausweicht,
**dadurch gekennzeichnet, daß** der Dosierschieber (36) derart angetrieben wird, daß er in jedem Zyklus in einer Dichtphase über den Dichtbereich (20) des Rotationskolbens (14) hinweg durch rotationssynchron oszillierenden Antrieb dichtend mit der Außenumfangsfläche (18) des Rotationskolbens (14) zusammenwirkt und in einer Dosierphase in einem bestimmten Bereich zwischen dem jeweils vorbeibewegten Dichtbereich (20) und dem nachfolgenden Dichtbereich (20) zur Bildung des Dosierspaltes (40) von der rotationssynchron oszillierenden Bewegung zeitweise abweicht sowie in einer anschließenden Schließphase zum Schließen der Arbeitskammer (22) wieder in die Dichtphase übergeht.

2. Rotationskolbendosierer nach Anspruch 1,
**dadurch gekennzeichnet, daß** der Dosierschieber (36) mit der permanent rotationssynchron in Anpassung an die Kontur der Außenumfangsfläche (18) des Rotationskolbens (14) oszillierenden Antriebseinrichtung (42) über Bewegungsübertragungsmittel kinematisch verbunden ist.

3. Rotationskolbendosierer nach Anspruch 2,
**dadurch gekennzeichnet, daß** die Bewegungsübertragungsmittel ein Zwischengetriebe (70a; 70b) mit einem vorzugsweise variablen Bewegungsübertragungsverhalten aufweisen.

4. Rotationskolbendosierer nach Anspruch 2 oder 3,
**dadurch gekennzeichnet, daß** das die Bewegung des Dosierschiebers (36) in der Dosierphase über die Bewegungsübertragungsmittel (70a;70b) zeitweilig relativ zu der permanent oszillierenden Antriebseinrichtung (42) verlangsamt, unterbrochen und/oder reversiert wird.

5. Rotationskolbendosierer nach einem oder mehreren der Ansprüche 2 bis 4,
**dadurch gekennzeichnet, daß** die Bewegungsübertragungsmittel (70a; 70b) zum Variieren des Bewegungsverhaltes des Dosierschiebers (36), insbesondere zum Variieren der zeitlichen bzw. in Umfangs- bzw. Rotationsrichtung des Rotationskolbens (14) gemessenen räumlichen Länge der Dosierphase relativ zur Länge der Dichtphase und/oder zum Variieren der radialen Weite des Dosierspaltes (40), verstellbar ausgebildet sind.

6. Rotationskolbendosierer nach einem oder mehreren der Ansprüche 3 bis 5,
**dadurch gekennzeichnet, daß** das Zwischengetriebe (70a) als ein insbesondere variabel intermittierendes Schubgetriebe ausgebildet ist, wobei der Dosierschieber (36) mit einem von der Antriebseinrichtung (42) ständig synchron zur Rotation des Rotationskolbens (14) radial hin und her angetriebenen Halter (38) derart relativbeweglich verbunden ist, daß er eine unstetige, jeweils in beiden Totpunkt-Stellungen der radialen Hin- und Herbewegung durch zeitweiligen Stillstand unterbrochene Bewegung ausführt, so daß während der Schließphase der Dosierspalt (40) durch weitergehende Rotation des Rotationskolbens (14) relativ zu dem stillstehenden Dosierschieber (36) verkleinert und im wesentlichen geschlossen wird.

7. Rotationskolbendosierer nach Anspruch 6,
**dadurch gekennzeichnet, daß** der Dosierschieber (36) während der Dichtphase von der Antriebseinrichtung (42) über den Halter (38) und ein erstes, radial inneres Mitnehmerelement (48) des Halters (38) derart rotationssynchron angetrieben wird, daß er bis zu seiner äußeren Totpunkt-Stellung dem Verlauf der Außenumfangsfläche (18) des Rotationskolbens (14) folgt und dabei vorzugsweise über einen definierten Dichtspalt beabstandet ist.

8. Rotationskolbendosierer nach Anspruch 6 oder 7,
**dadurch gekennzeichnet, daß** der Dosierschieber (36) durch seine relativbewegliche Verbindung mit dem Halter (38) in seiner äußeren Totpunkt-Stellung zeitweilig stillsteht, so daß durch weitergehende Rotation des Rotationskolbens (14) in einer Öffnungsphase die sich im nächsten Zyklus bildende Arbeitskammer (22) zunächst zwischen der Innenumfangsfläche (6) des Zylinderraums (4) und dem Rotationskolben (14) in Richtung des Einlasses (8) offen ist, bis der Halter (38) den Dosierschieber (36) durch Anlage an einem zweiten, radial äußeren Mitnehmerelement (50) in die Dosierstellung mitnimmt.

9. Rotationskolbendosierer nach Anspruch 7 oder 8,
**dadurch gekennzeichnet, daß** das erste, innere Mitnehmerelement (48) - insbesondere starr - mit dem Halter (38) derart verbunden ist, daß der Dosierschieber (36) in seiner äußeren Totpunkt-Stellung mit seinem dem Rotationskolben (14) zugekehrten Ende zumindest gerade bis außerhalb des Zylinderraums (4) gelangt.

10. Rotationskolbendosierer nach Anspruch 8 oder 9,
**dadurch gekennzeichnet, daß** das zweite, äußere Mitnehmerelement (50) zur Einstellung der Größe des Dosierspaltes (40) verstellbar mit dem Halter (38) verbunden ist.

11. Rotationskolbendosierer nach einem oder mehreren der Ansprüche 8 bis 10,
**dadurch gekennzeichnet, daß** das zweite, äußere Mitnehmerelement (50) derart in Bewegungsrichtung (44) des Halters (38) und des Dosierschiebers (36) federelastisch ist, daß bezüglich der Mitnahme-Anlage des Dosierschiebers (36) an dem Mitnehmerelement (50) unterhalb eines bestimmten Grenzwertes einer Anlagekraft (F) eine im wesentlichen starre, relativbewegungsfreie Anlage gewährleistet ist und bei Auftreten einer Anlagekraft (F) mit einem den Grenzwert übersteigenden Wert eine weitergehende Bewegung des Dosierschiebers (36) relativ zu dem Halter (38) gegen die Federelastizität des Mitnehmerelementes (50) auftritt.

12. Rotationskolbendosierer nach Anspruch 11,
**dadurch gekennzeichnet, daß** das zweite Mitnehmerelement (50) von einer Feder, vorzugsweise einer Schraubenfeder (56), gebildet oder über eine entsprechende Feder abgestützt ist.

13. Rotationskolbendosierer nach einem oder mehreren der Ansprüche 6 bis 12,
**dadurch gekennzeichnet, daß** der Dosierschieber (36) derart kraftschlüssig geführt ist, daß er sich nur bei Mitnahme durch eines der Mitnehmerelemente (48,50) des Halters (38) bewegt und ansonsten kraftschlüssig in beliebigen Positionen stillstehend gehalten ist.

14. Rotationskolbendosierer nach einem oder mehreren der Ansprüche 3 bis 5,
**dadurch gekennzeichnet, daß** das Zwischengetriebe (70b) als Hebelgetriebe ausgebildet ist, wobei ein zweiarmiger Hebel (74) über seinen Hebeldrehpunkt (76) mit der ständig oszillierenden Antriebseinrichtung (42) verbunden ist, und wobei ein erster Hebelarm (78) mit dem Dosierschieber (36) und ein zweiter Hebelarm (80) mit Bewegungssteuermitteln (82) verbunden sind.

15. Rotationskolbendosierer nach Anspruch 14,
**dadurch gekennzeichnet, daß** der erste Hebelarm (78) sich quer, insbesondere im wesentlichen senkrecht zur Bewegungsrichtung (46) des Dosierschiebers (36) erstreckt, und daß der zweite Hebelarm (80) etwa in bzw. parallel zu der Bewegungsrichtung (46) verläuft.

16. Rotationskolbendosierer nach Anspruch 14 oder 15,
**dadurch gekennzeichnet, daß** die Bewegungssteuermittel (82) eine Steuerkurvenbahn (98) und ein an dem zweiten Hebelarm (80) angeordnetes, mit der Steuerkurvenbahn (98) zusammenwirkendes Nockenelement (100) umfassen.

17. Rotationskolbendosierer nach Anspruch 16,
**dadurch gekennzeichnet, daß** die Steuerkurvenbahn (98) aus einem ersten, im wesentlichen entsprechend der Bewegungsrichtung (46) des Dosierschiebers (36) bzw. der Antriebseinrichtung (42) verlaufenden Abschnitt (98a) und einem in einem bestimmten, insbesondere variablen Neigungswinkel (α) schräg zum ersten Abschnitt (98a) verlaufenden, zweiten Abschnitt (98b) besteht.

18. Rotationskolbendosierer nach Anspruch 16 oder 17,
**dadurch gekennzeichnet, daß** die Steuerkurvenbahn (98) Bestandteil eines ortsfest angeordneten, vorzugsweise zur Einstellung des Dosiervolumens in Bewegungsrichtung (46) der Antriebseinrichtung (42) verstellbar geführten Steuerelementes (102) ist.

19. Rotationskolbendosierer nach einem oder mehreren der Ansprüche 16 bis 18,
**dadurch gekennzeichnet, daß** das Hebelgetriebe bezüglich seiner Hebelverhältnisse und /oder die Steuerkurvenbahn (98) bezüglich des Neigungswinkels (α) ihres zweiten Abschnittes (98b) derart ausgelegt ist, daß der von der Antriebseinrichtung (42) über den Hebeldrehpunkt (76) ständig rotationssynchron oszillierend angetriebene Hebel (74) über den ersten Hebelarm (78) den Dosierschieber (36) derart kinematisch beaufschlagt, daß letzterer in der Dosierphase zeitweilig zur Bildung des Dosierspaltes (40) stehenbleibt oder sich langsamer oder sogar richtungsumgekehrt bewegt.

20. Rotationskolbendosierer nach einem oder mehreren der Ansprüche 1 bis 19,
**gekennzeichnet durch** eine Mehrfachanordnung von mindestens zwei gleichachsig hintereinanderliegend gemeinsam angetriebenen Rotationskolben (14) und entsprechend zugehörigen Dosierschiebern (36), wobei jeder einzelne Dosierschieber (36) vorzugsweise über Stellmittel (60) zur Feineinstellung des jeweiligen Dosierspaltes (40) verstellbar ist.

21. Rotationskolbendosierer nach einem oder mehreren der Ansprüche 1 bis 20 oder nach dem Oberbegriff des Anspruchs 1,
**dadurch gekennzeichnet, daß** der/jeder Dosierschieber (36) derart federelastisch an einem Halter abgestützt ist, daß er in Öffnungsrichtung gegen Federkraft beweglich ist.

22. Rotationskolbendosierer nach einem oder mehreren der Ansprüche 1 bis 21 oder nach dem Oberbegriff des Anspruchs 1,
**dadurch gekennzeichnet, daß** der /jeder Dosierschieber aus einzelnen, parallelen Stabelementen besteht, wobei jedes Stabelement derart federelastisch abgestützt ist, daß es unabhängig von den anderen Stabelementen in Öffnungsrichtung gegen Federkraft beweglich ist.

23. Rotationskolbendosierer nach einem oder mehreren der Ansprüche 1 bis 22 oder nach dem Oberbegriff des Anspruchs 1,
**dadurch gekennzeichnet, daß** im Bereich des Auslasses (10) Mittel zum Einblasen von Druckluft derart angeordnet sind, daß das Entleeren der Arbeitskammer (22) durch Ausblasen des Mediums unterstützt wird.

24. Schiebersteuerung für einen Schieberdosierer mit mindestens einem von einer oszillierenden Antriebseinrichtung angetriebenen Dosierschieber,
**gekennzeichnet durch** ein zwischen der Antriebseinrichtung und dem Dosierschieber angeordnetes Zwischengetriebe (70a;70b) nach einem oder mehreren der vorhergehenden Ansprüche, insbesondere nach einem oder mehreren der Ansprüche 14 bis 19.

## Claims

1. Rotary piston metering device (1) for metering pourable or free-flowing, in particular powdered or granular media, having a rotary piston (14) mounted inside a cylindrical space (4) which in the region of its outer circumferential surface (18) has at least one sealing region (20) acting in sealing manner in conjunction with an inner circumferential surface (6) of the cylindrical space (4) in such a way that in its rotation in each cycle - starting in each case from the region of an inlet (8) - an operating chamber (22) is formed for accommodating a certain volume of the medium, wherein for varying the volume of the medium conveyed in the operating chamber (22) a metering valve (36) is introduced adjustably into the cylindrical space (4) in.the radial direction in such a way that between the rotary piston (14) and the end of the metering valve (36) facing towards the latter a metering gap (40) is adjustable with a variable opening width (W), wherein the metering valve (36) is driven back and forth radially by means of a drive device (42) as a function of the rotation of the rotary piston (14) in such a way that the metering valve (36) during each movement past the sealing region (20) of the rotary piston (14) deviates outwardly from the cylindrical space (4) from its metering position projecting at any time into the cylindrical space, **characterised in that** the metering valve (36) is driven in such a way that in each cycle in a sealing phase it acts together in sealing manner with the outer circumferential surface (18) of the rotary piston (14) over the sealing region (20) of the rotary piston (14) by means of a drive oscillating in synchrony with rotation and in a metering phase in a certain region between the sealing region (20) moved past at any time and the following sealing region (20) departs intermittently from the rotationally synchronously oscillating movement to form the metering gap (40) and in a subsequent closing phase again passes over into the sealing phase for closing the operating chamber (22).

2. Rotary piston metering device according to Claim 1, **characterised in that** the metering valve (36) is kinematically connected to the drive device (42) oscillating in permanent rotational synchrony in adaptation to the contour of the outer circumferential surface (18) of the rotary piston (14) via means for transmission of motion.

3. Rotary piston metering device according to Claim 2, **characterised in that** the means for transmission of motion possess an intermediate gear (70a; 70b) having preferably variable motion transmission properties.

4. Rotary piston metering device according to Claim 2 or 3, **characterised in that** the movement of the metering valve (36) in the metering phase is intermittently slowed.down, interrupted and/or reversed via the motion transmission means (70a; 70b) relative to the permanently oscillating drive device (42).

5. Rotary piston metering device according to one or more of Claims 2 to 4, **characterised in that** the motion transmission means (70a; 70b) for varying the movement behaviour of the metering valve (36), in particular for varying the length of time or the spatial length measured in the circumferential or rotational direction of the metering phase relative to the sealing phase and/or for varying the radial width of the metering gap (40) are constructed to be adjustable.

6. Rotary piston metering device according to one or more of Claims 3 to 5, **characterised in that** the intermediate gear (70a) is constructed in particular as a variably intermittent sliding gear, wherein the metering valve (36) is connected in relatively movable manner to a holder (38) driven radially back and forth constantly in synchrony with the rotation of the rotary piston by the drive device (42) in such a way that the holder carries out a discontinuous movement interrupted in each of both dead-centre positions of the radial back-and-forth movement by intermittent stoppage so that during the closing phase due to continuing rotation of the rotary piston (14) relative to the idling metering valve (36) the metering gap (40) reduces and is substantially closed.

7. Rotary piston metering device according to Claim 6, **characterised in that** the metering valve (36) is driven rotationally synchronously during the sealing phase by the drive device (42) via the holder (38) and a first radially internal carrier element (48) of the holder (38) in such a way that up to its external dead centre position it follows the course of the outer circumferential surface (18) of the rotary piston (14) and in doing so is preferably distanced by a defined sealing gap.

8. Rotary piston metering device according to Claim 6 or 7, **characterised in that** the metering valve (36) due its connection in relative motion to the holder (38) stops intermittently in its external dead centre position so that due to continuing rotation of the rotary piston (14) in an opening phase the operating chamber (22) forming in the next cycle is initially open between the inner circumferential surface (6) of the cylindrical space (4) and the rotary piston (14) in the direction of the inlet (8) until the holder (38) carries the metering valve (36) into the metering position by contact with a second, radially external carrier element (50).

9. Rotary piston metering device according to Claim 7 or 8, **characterised in that** the first, internal carrier element (48) is connected to the holder (38) - in particular rigidly - in such away that the metering valve (36) in its external dead centre position reaches at least by its end facing towards the rotary piston (14) just up to the outside of the cylindrical space.

10. Rotary piston metering device according to Claim 8 or 9, **characterised in that** the second, external carrier element (50) is connected to the holder (38) adjustably for setting the size of the metering gap (40).

11. Rotary piston metering device according to one or more of Claims 8 to 10, **characterised in that** the second, external carrier element (50) is elastically sprung in the direction of motion (44) of the holder (38) and the metering valve (36) in such a way that with regard to the positioning of the metering valve (36) against the carrier element(50) below a certain limiting value of a contact force (F) a substantially rigid contact free of relative motion is ensured and on occurrence of a contact force (F) having a value exceeding the limiting value a continuing movement of the metering valve (36) relative to the holder (38) occurs against the spring elasticity of the carrier element(50).

12. Rotary piston metering device according to Claim 11, **characterised in that** the second carrier element(50) is formed by a spring, preferably a spiral spring (56), or is supported by an appropriate spring.

13. Rotary piston metering device according to one or more of Claims 6 to 12, **characterised in that** the metering valve (36) is guided in a force-locking manner of a frictional joint in such a way that it moves only on carriage by one of the carrier elements (48, 50) of the holder (38) and is otherwise held at rest in any positions in a force-locking manner.

14. Rotary piston metering device according to one or more of Claims 3 to 5, **characterised in that** the intermediate gear (70b) is constructed as a lever gear, wherein a two-armed lever (74) is connected via its lever fulcrum (74) to the constantly oscillating drive device (42) and wherein a first lever arm (78) is connected to the metering valve (36) and a second lever arm (80) is connected to the motion control means (82).

15. Rotary piston metering device according to Claim 14, **characterised in that** the first lever arm (78) extends transversely, in particular substantially vertically, with respect to the direction of motion (46) of the metering valve (36) and that the second lever arm (80) runs approximately in or parallel to the direction of motion (46).

16. Rotary piston metering device according to Claim 14 or 15, **characterised in that** the means of motion control (82) comprise a radial cam pathway (98) and a cam member (100) arranged on the second lever arm (80) engaging in the radial cam pathway (98).

17. Rotary piston metering device according to Claim 16, **characterised in that** the radial cam pathway (98) consists of a first section (98a) running substantially according to the direction of movement (46) of the metering valve (36) or the drive device (42) and a second section (98b) running at a certain, in particular variable, angle of inclination (α) at a slant to the first section (98a).

18. Rotary piston metering device according to Claim 16 or 17, **characterised in that** the radial cam pathway (98) is a component of an adjustably guided control member (102) arranged in fixed position, preferably for setting the metering volume in the direction of movement (46) in the drive direction (42).

19. Rotary piston metering device according to one or more of Claims 16 to 18, **characterised in that** the lever gear with respect to its lever ratios and/or the radial cam pathway (98) with respect to the angle of inclination (α) of its second section (98b) is designed in such a way that the lever (74) driven by the drive device (42) via the lever fulcrum (76) in constantly rotationally synchronously oscillating manner acts kinematically via the first lever arm (78) upon the metering valve (36) in such a way that the latter stops for a time in the metering phase to form the metering gap (40) or moves more slowly or even in the reverse direction.

20. Rotary piston metering device according to one or more of Claims 1 to 19, **characterised by** a multiple arrangement of at least two rotary pistons (14) driven jointly behind one another on the same axis and correspondingly associated metering valves (36), wherein each single metering valve (36) is preferably adjustable via setting means (60) for the fine adjustment of the metering gap (40) in question.

21. Rotary piston metering device according to one or more of Claims 1 to 20 or according to the introductory part of Claim 1, **characterised in that** the or each metering valve (36) is supported in sprung elastic manner on a holder in such a way that it is movable against spring force in the opening direction.

22. Rotary piston metering device according to one or more of Claims 1 to 21 or according to the introductory part of Claim 1, **characterised in that** the/each metering valve consists of single, parallel rod elements, wherein each rod element is supported in sprung elastic manner in such a way that it is movable independently of the other rod elements in the opening direction against spring force.

23. Rotary piston metering device according to one or more of Claims 1 to 22 or according to the introductory part of Claim 1, **characterised in that** in the region of the outlet (10) means are arranged for blowing in compressed air in such a way that the emptying of the operating chamber (22) is supported by blowing out the medium.

24. Valve control system for a sliding valve metering device having at least one metering valve driven by an oscillating drive device, **characterised by** an intermediate gear (70a; 70b) arranged between the drive device and the metering valve according to one or more of the preceding claims, in particular according to one or more of Claims 14 to 19.

## Revendications

1. Doseur à piston rotatif (1) destiné à doser des milieux liquides ou coulants, en particulier pulvérulents ou granulaires, comprenant un piston rotatif (14) monté à l'intérieur d'une chambre de cylindre (4) et qui présente, dans la région de sa surface périphérique extérieure (18), au moins une région de fermeture étanche (20) qui coopère en formant joint avec une surface périphérique intérieure (6) de la chambre de cylindre (4) de telle manière que, dans sa rotation, il se forme à chaque cycle - à chaque fois en partant de la région d'une entrée (8) - une chambre de travail (22) destinée à recevoir un volume déterminé du milieu, et dans lequel, pour faire varier le volume du milieu qui est transporté dans la chambre de travail (22), il est prévu une vanne de dosage (36) guidée pour se déplacer dans la direction radiale dans le sens qui pénètre dans la chambre de cylindre (4), de telle manière qu'on puisse régler entre le piston rotatif (14) et l'extrémité de la vanne de dosage (36) dirigée vers ce dernier, une fente de dosage (40) ayant une largeur d'ouverture variable (W), la vanne de dosage (36) étant entraînée alternativement dans la direction radiale au moyen d'un dispositif d'entraînement (42) en fonction de la rotation du piston rotatif (14), de telle manière qu'à chaque passage de la région de fermeture étanche (20) du piston rotatif (14), la vanne de dosage (36) cède vers l'extérieur de la chambre de cylindre (4) en partant de la position de dosage engagée dans la chambre de cylindre (4) qu'elle possède à ce moment,
**caractérisé en ce que** la vanne de dosage (36) est entraînée de telle manière qu'à chaque cycle, dans une phase de fermeture étanche, elle coopère avec la surface périphérique extérieure (18) du piston rotatif (14), sur toute la région de fermeture étanche (20) du piston rotatif (14), sous faction d'un entraînement oscillant synchronisé avec la rotation, en formant un joint étanche, puis, dans une phase de dosage, dans une région déterminée entre la région de fermeture étanche (20) qu'elle vient de franchir et la région de fermeture étanche (20) suivante, elle s'écarte temporairement du mouvement oscillant synchronisé avec la rotation pour former la fente de dosage (40) et, dans une phase de fermeture consécutive, elle revient à la phase de fermeture étanche pour fermer la chambre de travail (22).

2. Doseur à piston rotatif selon la revendication 1,
**caractérisé en ce que** la vanne de dosage (36) est reliée cinématiquement, par l'intermédiaire de moyens de transmission du mouvement, au dispositif d'entraînement (42) qui oscille de façon synchronisée en permanence avec la rotation pour s'adapter au contour de la surface périphérique extérieure (18) du piston rotatif (14).

3. Doseur à piston rotatif selon la revendication 2,
**caractérisé en ce que** les moyens de transmission du mouvement comprennent un mécanisme intermédiaire (70a, 70b) possédant un comportement de transmission du mouvement qui est de préférence variable.

4. Doseur à piston rotatif selon la revendication 2 ou 3,
**caractérisé en ce que** le mouvement de la vanne de dosage (36) dans la phase de dosage est temporairement ralenti, interrompu et/ou inversé par rapport au dispositif d'entraînement (42) en mouvement oscillant permanent, sous l'action des moyens de transmission du mouvement (70a ; 70b).

5. Doseur à piston rotatif selon une ou plusieurs des revendications 2 à 4,
**caractérisé en ce que** les moyens de transmission du mouvement (70a ; 70b) sont de construction réglable pour faire varier le comportement de mouvement de la vanne de dosage (36), en particulier pour faire varier la longueur de la phase de dosage, dans le temps ou dans l'espace, mesurée dans la direction de la périphérie ou de la rotation du piston rotatif (14), relativement à la longueur de la phase de fermeture étanche, et/ou pour faire varier la largeur radiale de la fente de dosage (40).

6. Doseur à piston rotatif selon une ou plusieurs des revendications 3 à 5,
**caractérisé en ce que** le mécanisme intermédiaire (70a) est constitué par un mécanisme de poussée intermittent, en particulier variable, la vanne de dosage (36) étant reliée à une monture (38) qui est entraînée en mouvement radial alternatif par le dispositif d'entraînement (42) en permanence synchronisé avec la rotation du piston rotatif (14), de telle manière qu'il décrive un mouvement non constant, interrompu dans les deux positions de point mort du mouvement radial alternatif par un arrêt temporaire, de telle sorte que, pendant la phase de fermeture, la fente de dosage (40) est rétrécie et sensiblement fermée par la poursuite de la rotation du pignon rotatif (14) par rapport à la vanne de dosage (36) qui est immobile.

7. Doseur à piston rotatif selon la revendication 6,
**caractérisé en ce que**, pendant la phase de fermeture étanche, la vanne de dosage (36) est entraînée par le dispositif d'entraînement (42) par l'intermédiaire de la monture (38) et d'un premier élément entraîneur (48) radialement intérieur de la monture (38) de façon synchrone en rotation de telle manière qu'elle suive le profil de la surface extérieure (18) du piston rotatif (14) jusqu'à sa position de point mort extérieur et qu'elle soit alors de préférence espacée d'une fente de joint définie.

8. Doseur à piston rotatif la revendication 6 ou 7,
**caractérisé en ce que**, sous l'effet de sa liaison relativement mobile avec la monture (38), la vanne de dosage (36) reste temporairement immobile dans sa position de point mort extérieur, de sorte que, sous l'effet de la poursuite de la rotation rotatif (14) dans une phase d'ouverture, la chambre de travail (22) qui se forme dans le cycle suivant, est tout d'abord ouverte en direction de l'entrée (8) entre la surface périphérique intérieure (6) de la chambre de cylindre (4) et le piston rotatif (14), jusqu'à ce que la monture (38) entraîne la vanne de dosage (36) avec elle par appui contre un deuxième élément entraîneur (50), radialement extérieur, pour la placer dans la position de dosage .

9. Doseur à piston rotatif la revendication 7 ou 8,
**caractérisé en ce que** le premier élément entraîneur intérieur (48) est relié ― en particulier rigidement ― à la monture (38) de telle manière que, dans sa position de point mort extérieure, la vanne de dosage (36) place son extrémité dirigée vers le piston rotatif (14), au moins juste en dehors de la chambre de cylindre (4).

10. Doseur à piston rotatif la revendication 8 ou 9,
**caractérisé en ce que** le deuxième élément entraîneur, extérieur, (50) est relié à la monture (38) de façon réglable pour le réglage de la dimension de la fente de dosage (40).

11. Doseur à piston rotatif selon une ou plusieurs des revendications 8 à 10,
**caractérisé en ce que** le deuxième élément entraîneur, extérieur, (50) est élastique à la façon d'un ressort dans la direction du mouvement (44) de la monture (38) et de la vanne de dosage (36) de telle manière qu'au niveau de l'appui d'entraînement de la vanne de dosage (36) contre l'élément entraîneur (50), un appui sensiblement rigide, dépourvu de déplacement relatif, soit assuré au-dessous d'une valeur limite déterminée d'un force d'appui (F) et que, lors de l'apparition d'une force d'appui (F) d'une valeur excédant la valeur limite, il se produise une poursuite du mouvement de la vanne de dosage (36) par rapport à la monture (38) à l'encontre de l'élasticité de l'élément entraîneur (50).

12. Doseur à piston rotatif la revendication 11,
**caractérisé en ce que** le deuxième élément entraîneur (50) est formé par un ressort, de préférence un ressort hélicoïdal (56) ou est soutenu par un ressort correspondant.

13. Doseur à piston rotatif selon une ou plusieurs des revendications 6 à 12,
**caractérisé en ce que** la vanne de dosage (36) est entraînée par action de force, de sorte qu'elle ne se déplace que lorsqu'elle est entraînée par un des éléments entraîneurs (48, 50) de la monture (38) et que, autrement, elle est tenue immobile par action de force dans des positions quelconques.

14. Doseur à piston rotatif selon une ou plusieurs des revendications 3 à 5,
**caractérisé en ce que** le mécanisme intermédiaire (70b) est constitué par un mécanisme à levier, un levier à deux bras (74) étant relié par son centre de rotation de levier (76) au dispositif d'entraînement (42) qui oscille en permanence, un premier bras de levier (78) étant relié à la vanne de dosage (36) et un deuxième bras de levier (80) étant relié à des moyens de commande du mouvement (82).

15. Doseur à piston rotatif la revendication 14,
**caractérisé en ce que** le premier bras de levier (78) s'étend transversalement, en particulier sensiblement perpendiculairement, à la direction de mouvement (46) de la vanne de dosage (36) et **en ce que** le deuxième bras de levier (80) s'étend à peu prés dans la direction du mouvement (46) ou parallèlement à cette direction.

16. Doseur à piston rotatif la revendication 14 ou 15,
**caractérisé en ce que** les moyens de commande de mouvement (82) comprennent un profil de came de commande (98) et un élément de bossage (100) prévu sur le deuxième bras de levier (80), et qui coopère avec le profil de came de commande (98).

17. Doseur à piston rotatif la revendication 16,
**caractérisé en ce que** le profil de came de commande (98) est composé d'un premier segment (98a) qui correspond sensiblement à la direction de mouvement (46) de la vanne de dosage (36) ou du dispositif d'entraînement (42) et d'un deuxième segment (98b) qui s'étend dans une direction inclinée d'un certain angle d'inclinaison (α), en particulier variable, par rapport au premier segment (98a).

18. Doseur à piston rotatif la revendication 16 ou 17,
**caractérisé en ce que** le profil de came de commande (98) fait partie d'un élément de commande (102) disposé en position fixe, de préférence entraîné de façon réglable dans la direction du mouvement (46) du dispositif d'entraînement (42), pour le réglage du volume de dosage.

19. Doseur à piston rotatif selon une ou plusieurs des revendications 16 à 18,
**caractérisé en ce que** le mécanisme à levier est construit, en ce qui concerne ses rapports de bras de levier, et/ou le profil de came de commande (98), en ce qui concerne l'angle d'inclinaison (α) de son deuxième segment (98b), de telle manière que le levier (74) qui est entraîné en oscillation en permanence avec synchronisme de rotation par le dispositif d'entraînement (42) par l'intermédiaire du centre de rotation de levier (76), sollicite la vanne de dosage (36) cinématiquement par l'intermédiaire du premier bras de levier (78) de telle manière que, dans la phase de dosage, cette vanne reste immobile temporairement pour former la fente de dosage (40), ou se déplace lentement ou même en sens inverse.

20. Doseur à piston rotatif selon une ou plusieurs des revendications 1 à 19
**caractérisé par** une disposition multiple d'au moins deux pistons rotatifs (14) placés l'un derrière l'autre sur le même axe, avec un entraînement commun et de vannes de dosage (36) qui leur correspondent, chaque vanne de dosage individuelle (36) pouvant être déplacée de préférence par l'intermédiaire de moyens de positionnement (60) pour le réglage fin de la fente de dosage (40) du moment considéré.

21. Doseur à piston rotatif selon une ou plusieurs des revendications 1 à 20,
ou selon le préambule de la revendication 1,
**caractérisé en ce que** la ou chaque vanne de dosage (36) est appuyée élastiquement contre une monture de telle manière qu'elle puisse se déplacer dans le sens de l'ouverture à l'encontre de la force élastique.

22. Doseur à piston rotatif selon une ou plusieurs des revendications 1 à 21,
ou selon le préambule de la revendication 1,
**caractérisé en ce que** la ou chaque vanne de dosage est composée d'éléments individuels en forme de barre, parallèles, chaque élément en forme de barre étant appuyé élastiquement de manière à pouvoir se déplacer dans la direction de l'ouverture à l'encontre de la force élastique indépendamment des autres éléments en forme de barre.

23. Doseur à piston rotatif selon une ou plusieurs des revendications 1 à 22,
ou selon le préambule de la revendication 1,
**caractérisé en ce que** des moyens d'insufflation d'air comprimé sont disposés dans la région de la sortie (10) de telle manière que la vidange de la chambre de travail (22) soit assistée par l'éjection du milieu par soufflage.

24. Commande de vanne pour un doseur à vanne possédant au moins une vanne de dosage entraînée par un dispositif d'entraînement oscillant,
**caractérisé par** un mécanisme intermédiaire (70a ; 70b) selon une ou plusieurs des revendications précédentes, en particulier selon une ou plusieurs des revendications 14 à 19, intercalé entre le dispositif d'entraînement et la vanne de dosage.
